# EUROPEAN PATENT APPLICATION

(11) **EP 4 292 992 A1**
(43) Date of publication of application: **20.12.2023**
(21) Application number: 23175349.2
(22) Date of filing: 25.05.2023
(51) Int. Cl.: C03C 17/36, B32B 17/00, G02F 1/1333

(54) **SYSTEMS WITH INFRARED REFLECTIVE COATINGS**

(30) Priority: 17.06.2022 US 202263353387 P; 30.03.2023 US 202318193507
(71) Applicant: Apple Inc., Cupertino, CA 95014 (US)
(72) Inventor: VEERASAMY, Vijayen S., Cupertino, 95014 (US); MASSCHELEIN, Peter F., Cupertino, 95014 (US)
(74) Representative: Zacco Denmark A/S

(57) **Abstract**

A transparent structure may have structural layers such as an inner layer and an outer layer, which may be formed from glass. The transparent structure may be curved. At least one of the inner layer and the outer layer may be coated with an infrared reflection coating. The infrared reflection coating may be formed from multiple optical resonators. Each of the resonators may include two half-mirrors separated by a dielectric layer. The half-mirrors may include infrared reflective material, such as silver. At least some of the resonators may additionally include a getter layer. The getter layer may be formed from amorphous material, nanoparticles in dielectric material, or other desired material, and may protect the infrared reflective material while the infrared reflection coating is being deposited. Additionally, the getter layer may reduce the color shift exhibited by high angle light as it passes through the transparent structure.

## Description

### Field

This relates generally to structures that pass light, and, more particularly, to transparent structures.

### Background

Windows generally include transparent layers, such as glass layers. If care is not taken, the glass layers may pass an undesired amount of infrared light.

### Summary

A system such as a vehicle, a building, or an electronic device may have windows. A window may separate an interior region from an exterior region, such as the interior and exterior regions of a vehicle. A window may have structural window layers such as an inner layer and an outer layer. The inner and outer glass layers may be separated by an air gap.

One or more infrared reflection coatings may be applied to the inner and/or outer glass layers. The infrared reflection coatings may include multiple optical resonators. Each of the optical resonators may include two half-mirrors sandwiching a loss-less dielectric. The half-mirrors may include an infrared reflection layer, such as a thin silver layer.

To protect the silver layers in the half-mirrors while the other layers are deposited and to reduce the color shifting of high viewing angle light passing through the window, at least some of the optical resonators may include a getter layer adjacent and on top of each metal layer. The getter layer may be formed from a lossy dielectric material, such as an amorphous material, nanoparticles in a dielectric, or ink.

### Brief Description of the Drawings

FIG. 1 is a schematic diagram of an illustrative apparatus in accordance with an embodiment.
FIG. 2 is a cross-sectional side view of an illustrative window having an infrared reflective coating in accordance with an embodiment.
FIG. 3 is a cross-sectional side view of an illustrative infrared reflective coating in accordance with an embodiment.
FIG. 4 is a graph of illustrative transmission spectra for windows with different infrared reflective coatings in accordance with an embodiment.
FIG. 5 is a schematic diagram of an illustrative window portion with an infrared reflective coating having repeating layers in accordance with an embodiment.
FIG. 6 is a cross-sectional side view of a curved window having an infrared reflective coating in accordance with an embodiment.

### Detailed Description

A system may have windows. The windows may include structures for blocking infrared light. Optionally, additional coatings, such as antireflection layers, or electro-optically adjustable components may also be incorporated into the windows. The system may be an electronic device, a building, a vehicle, or other suitable system. Illustrative configurations in which the system with the windows is a vehicle may sometimes be described herein as an example. This is merely illustrative. Window structures may be formed in any suitable system.

The electrically adjustable components of the windows may be used to adjust the optical properties of the windows. For example, electrically adjustable windows may be adjusted to change the absorption of light and therefore the light transmission of the windows. An adjustable light modulator layer may, for example, serve as an electrically adjustable sunroof for a rooftop window or may be used to implement an electrically adjustable shade for a side, front, or rear window. In an illustrative configuration, the transparency of the window may be modulated using a liquid crystal light modulator such as a guest-host liquid crystal light modulator. Adjustable optical component layers may also be used to display images, to provide illumination, and/or to otherwise adjust the appearance and behavior of a window.

A window for the system may include multiple glass layers. For example, a window may include an inner transparent structural layer (sometimes referred to as an inner glass layer) and an outer transparent structural layer (sometimes referred to as an outer glass layer). The inner and outer layers of the window may be separated by a gap. The gap may be filled with air or may be filled with a polymer, liquid, or other functional dielectric. Illustrative configurations in which the inner and outer glass layers are separated by air are sometimes described herein as an example.

The glass layers of a window may be single-layer glass layers (e.g., single layers of heat strengthened or tempered glass) or, in some configurations, may be multi-layer structures formed, for example, from first and second glass layers that are laminated together. A laminated glass layer may have a polymer such as polyvinyl butyral (PVB) that joins first and second glass layers to form a sheet of laminated glass. Multi-layer glass structures (laminated glass layers formed from two or more laminated glass layers with interposed PVB) and single-layer glass layers may include optional tinting (e.g., dye, pigment, etc.). Polymer layers in laminated glass layers (e.g., PVB layers) may also optionally be passively tinted.

As an alternative to glass, polymer layers may be used in forming windows. For example, windows may include one or more polymer layers, such as polycarbonate or acrylic layers. Laminated window structures may be formed from multiple polymer layers with an interlayer, such as a thermoplastic urethane (TPU) interlayer. In general, any desired interlayer may be used.

In some cases, it may be desirable to reduce an amount of infrared light that passes through a window. For example, reducing the amount of infrared light passing through a window may reduce the amount of heat that enters a system, such as an electronic device, vehicle or building. To reduce the amount of infrared light passing through the window, an infrared light reflection coating may be incorporated on one or more layers, such as glass or polymer layers, in the window. Examples in which an infrared light reflection coating is coupled to glass window layers are sometimes described herein, but the infrared light reflection coating may be applied on any desired layers.

The infrared light reflection coating may include one or more infrared reflective layers (such as silver layers) that reduce the amount of infrared light that passes through the window. Additional layers, such as base layer, seed layers and barrier layers, may be incorporated into the window for depositing the infrared reflective layers and to prevent the infrared reflective layers from reacting with external compounds during the deposition process, which may yield an infrared reflective layer with low refractive index (e.g., n< 0.1 at 550 nm) and low sheet resistance of between 1.1 to 3.5 Ohm/sq. A getter layer may be incorporated between the infrared reflective layer and the next dielectric layer. The getter layer may further protect the infrared reflective layers during the deposition process and may reduce color shifts in the glass at high angles of incidence.

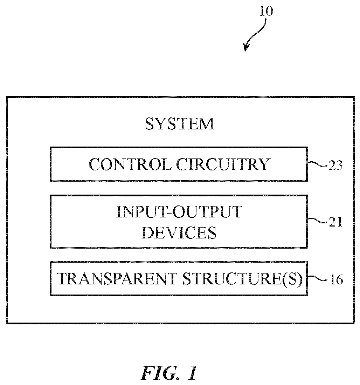

An illustrative system of the type that may include windows with one or more infrared light reflection coatings shown in FIG. 1. System 10 may be an electronic device, a vehicle, a building, or any other desired system. For example, system 10 may be an electronic device, such as a cell phone, a laptop computer, a desktop computer, a tablet computer, a television, or any other desired electronic device. The electronic device may include a device housing, a display on a front face of the device housing, and electronic components within the device housing. In other examples, system 10 may be a vehicle having a body with a chassis to which wheels are mounted, propulsion and steering systems, and other vehicle systems. The vehicle body may include doors, trunk structures, a hood, side body panels, a roof, and/or other body structures. Seats may be formed in the interior of the body. However, these examples are merely illustrative. In general, system 10 may be any desired system.

Regardless of the particular system, system 10 may include windows such as window(s) 16. Window 16 may separate the interior of system 10 from the exterior environment that is surrounding system 10. For example, windows 16 may include windows on the front and/or rear of an electronic device; on the front, rear, and sides of a vehicle; or on the sides of a building, as examples.

Input-output devices 21 may include sensors, audio components, displays, and other components. For example, input-output devices 21 may provide output to an occupant of a vehicle, may make measurements of the environment surrounding the vehicle, and may gather input from an occupant of the vehicle. If desired, some of the input-output devices may operate through window(s) 16. In some examples, input-output devices 21 may include communication devices, such as radios, that receive and/or send radio waves through window(s) 16.

Control circuitry 23 may include storage and processing circuitry such as volatile and non-volatile memory, microprocessors, application-specific integrated circuits, digital signal processors, microcontroller, and other circuitry for controlling the operation of the system, such as the vehicle. During operation, control circuitry 23 may control the components of the vehicle based on input from input-output devices 21.

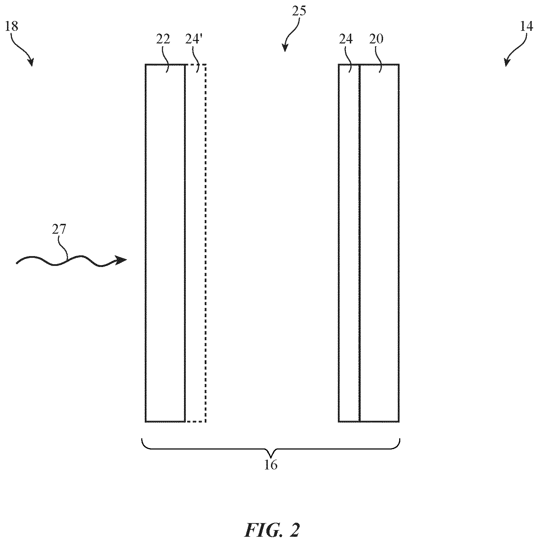

An illustrative configuration for a window such as one of windows 16 of FIG. 1 is shown in FIG. 2. As shown in FIG. 2, window 16 may separate interior region 14 (e.g., a region inside system 10, such as a region inside a vehicle) from exterior region 18 (e.g., a region on the outside of system 10, such as region outside the vehicle). Window 16 may include inner layer 20 and outer layer 22. Layers 20 and 22 may be glass layers, ceramic layers, sapphire layers, polymer layers (such as polycarbonate or acrylic layers), or any other desired layers, and may be transparent or partially transparent (e.g., may be tinted to reduce the transmission of some visible light). Layers 20 and 22 may be also referred to as substrates herein (e.g., when coatings are applied to the layers).

Layers 20 and 22 may be formed from single-layer glass structures and/or multi-layer glass structures. These layers may be strengthened (e.g., by annealing, tempering, and/or chemical strengthening). In general, inner layer 20 may be a single-layer glass structure (e.g., a single layer of tempered glass) or a laminated glass layer and outer layer 22 may be a single-layer glass structure (e.g., a single layer of tempered glass) or a laminated glass layer. In embodiments in which layer 20 and/or layer 22 are laminated glass layers, they may include multiple layers of glass that are laminated together using one or more polymer layers. In embodiments in which layer 20 and/or layer 22 are laminated polymer layers, they may include multiple layers of polymer that are laminated together using one or more additional polymer layers. The polymer layers may be a layer of polyvinyl butyral, thermoplastic polyurethane, or other suitable polymer for attaching the glass layers.

Layers 20 and 22 may be separated by gap 25. Gap 25 may be an air gap, or gap 25 may be filled with any desired substance. For example, gap 25 may be filled with a polymer, liquid, or other dielectric. In some cases, gap 25 may be omitted, if desired.

Light, such as light 27, may be incident on window 16. As shown in FIG. 2, light 27 may be incident on outer layer 22, having reached window 16 from exterior region 18. Light 27 may include visible, infrared, ultraviolet, and other wavelengths. To reduce the transmission of infrared light through window 16, inner layer 20 may be coated with infrared reflection coating 24, which may reflect infrared light (e.g., infrared wavelengths of light 27) from reaching interior region 14.

Although light 27 is shown as being in exterior region 18, light with undesirable infrared components may be in interior region 14 and incident on inner layer 20, as well.

Although infrared reflection coating 24 is shown in FIG. 2 as being on the outer surface of inner layer 20, this is merely illustrative. As shown in FIG. 2, infrared reflection coating 24 may be at location 24' on the inner surface of outer layer 22 instead of or in addition to being on inner layer 20. Alternatively or additionally, infrared reflection coating 24 may be formed on the outside of window 16 (i.e., on the outer surface of outer layer 22 or the inner surface of inner layer 20), or may be formed on an additional layer that is formed between inner layer 20 and outer layer 22. In general, infrared reflection coating 24 may be formed anywhere within window 16 to reduce the amount of infrared light that passes through window 16.

If infrared reflection coating 24 is formed on a polymer layer, such as a layer of polycarbonate, it may be desirable to include an additional coating layer between infrared reflection coating 24 and the polymer layer. For example, a coating layer may be applied (e.g., through chemical vapor deposition (CVD) on the polymer layer prior to applying infrared reflection coating 24. The coating layer may reduce the stress on the polymer when infrared reflection coating 24 is deposited and may be formed from any desired material. In some examples, the coating layer may be a hybrid coating layer such as SiOCH or any SiOxCy:H material. For example, the hybrid coating layer may be formed from hexamethyldisiloxane (HMDSO). However, these materials are merely illustrative. In general, the hybrid layer may be formed from any desired material, such as ZrOC:H or TiOC:H. The coating may also be an anti-reflection layer, as it may have a refractive index that is the same or slightly higher than the underlying polymer. The refractive index of the coating may be graded, if desired.

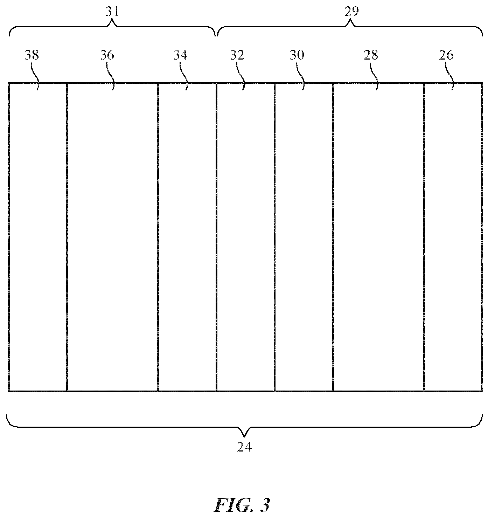

Regardless of where one or more infrared reflection coatings, such as infrared reflection coating 24, are formed, the infrared reflection coatings may include multiple layers to reflect infrared light. An illustrative stack up of an infrared reflection coating is shown in FIG. 3.

As shown in FIG. 3, an infrared reflection coating, such as infrared reflection coating 24, may include two optical resonators, resonator 29 and resonator 31. Resonator 29 may include half-mirror 26, dielectric layer 28, and half-mirror 30. Half-mirror 26 may be formed on a layer in window 16, such as inner layer 20 or outer layer 22 of FIG. 2. In some examples, half-mirror 26 may be formed directly on the window layer. Half-mirror 26 may include a metal layer, such as a silver layer, to reflect light incident on the half-mirror.

Dielectric layer 28 may be formed on half-mirror 26. Dielectric layer 28 may include any desired dielectric material, such as a polymer material or an oxide material. Dielectric layer 28 may separate half-mirror 26 from half-mirror 30. Half-mirror 30 may include an infrared reflection layer, which may be a metal layer, such as a silver layer, to reflect light incident on the half-mirror, and may have the same structure as half-mirror 26, if desired.

Resonator 29 may include getter layer 32 on half-mirror 30. Getter layer 32 may include lossy dielectric material. For example, getter layer 32 may include amorphous material, such as amorphous Si, amorphous silicon rich silicon nitride (SiNx where x < 1.33)), or amorphous germanium, may include ink, and/or may include metallic nanoparticles. The nanoparticles may be metal nanoparticles, such as silver or aluminum nanoparticles.

Getter layer 32 may have a thickness of 2 nm or less, 5 nm or less, between 1 nm and 2 nm, or any other desired thickness. In general, getter layer 32 may protect the infrared reflection layers (e.g., silver layers) in half-mirrors 30 and 26 when resonator 31 is deposited over resonator 29. The getter may preferentially react with oxidic based radicals and prevent further reactive species in the plasma from reaching the surface of the underlying silver film.

Resonator 31 may include half-mirror 34, dielectric layer 36, and half-mirror 38, which may be similar to or the same as half-mirror 26, dielectric layer 28, and half-mirror 30, respectively, if desired.

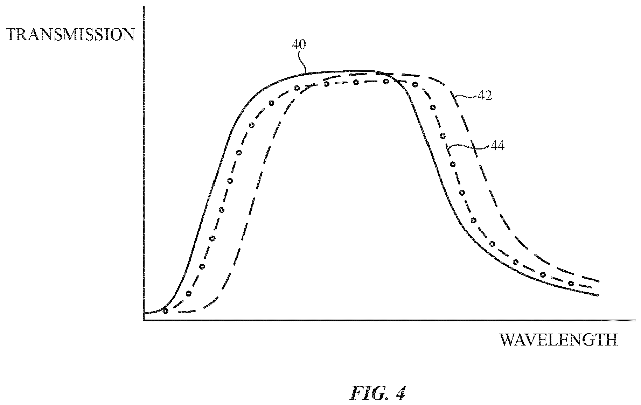

As opposed to having two resonators with two half-mirrors and an intervening dielectric layer (as may be the case with generic windows having infrared reflection coatings), including getter layer 32 in resonator 29 may protect the half-mirrors while they are deposited on window 16 and may also reduce the color shift of light, especially light at high angles of incidence on window 16, as the light passes through infrared reflection coating 24. An example of illustrative transmission spectra through window 16 are shown in FIG. 4.

As shown in FIG. 4, a window, such as window 16, may have transmission spectrum 40, which corresponds to light entering window 16 at 0°. In other words, light entering window 16 on-axis (parallel to an axis normal to an outer surface of window 16) may be transmitted according to transmission spectrum 40.

In a generic window without getter layer 32 (e.g., a window with resonators that only have half-mirrors and intervening dielectric layers with no getter layers), there may be a high color shift for light that enters the window at high angles of incidence. For example, transmission spectrum 42 corresponds to light entering a generic window without a getter layer at 60°. Light entering a generic window at a high angle will have be color shifted (e.g., more light at higher wavelengths will enter the window), resulting in reflections at low visible wavelengths (such as blue or green wavelengths).

In contrast, a window with getter layer 32, such as window 16 of FIG. 3, may exhibit a smaller color shift for light that enters window 16 at high angles of incidence. For example, transmission spectrum 44 corresponds to light entering window 16 (with getter layer 32) at 60°. As shown, light entering window 16 at high angles will be color shifted less than light entering a generic window (i.e., transmission spectrum 44 is shifted less than transmission spectrum 42). In other words, window 16, having infrared reflection coating 24 that includes getter layer 32, will have a more color-neutral transmission at high angles of incidence than generic windows with infrared reflection coatings without a getter layer. In this way, including getter layer 32 in resonator 29 may reduce color shifts of light incident on window 16 at high angles and may protect the half-mirror layers within the resonators as they are deposited on window 16.

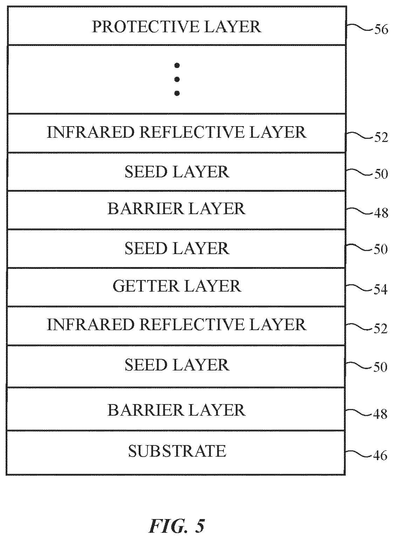

In general a window having an infrared reflection coating with multiple stacked resonators having intervening getter layers may be formed in any desired manner. An example of an infrared reflection coating stack up is shown in FIG. 5.

As shown in FIG. 5, an infrared reflection coating, such as infrared reflection coating 24, may be formed on substrate 46. Substrate 46 may be an inner or outer window layer, such as layer 20 or layer 22 of FIG. 2. Substrate 46 may be formed from glass, such as soda lime glass, may be formed from ceramic, may be formed from sapphire, may be formed from a polymer, such as polycarbonate, acrylic, or other desired polymer, or may be formed from any other desired material. Substrate 46 may be formed from a single-layer glass structure and/or multi-layer glass structures. Substrate 46 may be strengthened (e.g., by annealing, tempering, and/or chemical strengthening), if desired. In general, substrate 46 may be a single layer (such as a single-layer glass structure (e.g., a single layer of tempered glass)) or have multiple layers (such as a laminated glass layer). In embodiments in which substrate 46 is a laminated glass layer, substrate 46 may include multiple layers of glass that are laminated together using one or more polymer layers. The polymer layers may be a layer of polyvinyl butyral or other suitable polymer for attaching the glass layers.

Barrier layer 48 may be formed on substrate 48. Barrier layer 48 may be an amorphous layer and may be dense to protect substrate 46 and the layers above barrier layer 48 while they are deposited. In general, barrier layer 48 may have an index of refraction close to that of substrate 46 to reduce the reflection of light incident on substrate 46. For example, barrier layer 48 may have an index of refraction between 1.2 and 1.7, between 1.2 and 1.5, between 1.5 and 1.7, between 1.7 and 2, or any other desired value. In this way, barrier layer 48 may form an antireflection coating on substrate 46.

In some examples, barrier layer 48 may be a zinc oxide. For example, ZnSnOx, SnOx may be used to form barrier layer 48. Alternatively, barrier layer 48 may include TiOₓ, bismuth oxide, or any other desired material.

If substrate 46 is formed from a polymer, such as polycarbonate, it may be desirable to include an additional coating layer between substrate 46 and barrier layer 48. For example, a coating layer may be applied (e.g., through chemical vapor deposition (CVD) on substrate 46 prior to applying barrier layer 48. The coating layer may reduce the stress on the polymer of substrate 46 when the rest of the stack up is deposited and may be formed from any desired material. In some examples, the coating layer may be a hybrid coating layer such as SiOCH, any SiOxCy:H material (such as HMDSO), ZrOC:H, TiOC:H, or other desired hybrid material. The coating may also be an anti-reflection layer, as it may have a refractive index that is the same or slightly higher than the underlying polymer. The refractive index of the coating may be graded, if desired.

Seed layer 50 may be formed on barrier layer 48. Seed layer 50 may be a doped zinc oxide layer, such as Al doped ZnOx, or may be any other desired layer which would promote the growth of highly textured Ag. In some examples, seed layer 50 may be a crystalline layer. However, any desired material may be used to form seed layer 50. In general, seed layer 50 may facilitate the deposition of a high quality (Real(n) < 0.1 , preferably Real part (n) less than 0.07 at 550 nm) infrared reflective layer 52.

Infrared reflective layer 52 may be formed on seed layer 50. Infrared reflective layer 52 may be silver, or may be another desired infrared reflective material. In some examples, infrared reflective layer 52 may be a polycrystalline silver layer. Infrared reflective layer 52 may have any desired thickness, such as less than 30 nm, more than 8 nm, between 15-30 nm, or other desired thickness. In one illustrative embodiment, infrared reflective layer 52 may have a thickness equal to the grain size of the polycrystalline silver forming infrared reflective layer 52. For example, the grain size may be 15-30 nm and the thickness of infrared reflective layer 52 may be 15-30 nm. In other words, infrared reflective layer 52 may be a polycrystalline silver layer that is one grain thick.

If desired, infrared reflective layer 52 may be patterned. For example, material within infrared reflective layer 52, such as silver, may interfere with the transmission of waves, such as radio waves. If it is desirable to have radio waves pass through window 16 (e.g., if system 10 is a vehicle, a building, or an electronic device), infrared reflective layer 52 may be pattered to have openings. As a result, waves, such as radio waves, may pass through the openings unimpeded, while the remaining portions of infrared reflective layer 52 block infrared light from passing through window 16.

Getter layer 54 may be formed on infrared reflective layer 52. Getter layer 54 may include lossy dielectric material. For example, getter layer 54 may include amorphous material, such as amorphous silicon or amorphous germanium, may include ink, and/or may include nanoparticles. The nanoparticles may be metal nanoparticles, such as silver nanoparticles. Alternatively or additionally, getter layer 54 may include a Zn, Al, AlZn, or Al-rich AlN layer.

Getter layer 54 may have a thickness of 2 nm or less, 5 nm or less, between 1 nm and 2 nm, or any other desired thickness. Regardless of the thickness and material of getter layer 54, the getter layer may protect infrared reflective layer 52 (e.g., a silver layer) from oxidizing as other layers are deposited over infrared reflective layer 52. For example, oxygen gas may be used during the deposition of layers over infrared reflective layer 52, which would otherwise oxidize the silver (or other material) within infrared reflective layer 52. In this way, getter layer 54 may help prevent the oxygen gas from reaching infrared reflective layer 52 and oxidizing the material forming infrared reflective layer 52.

Seed layer 50 may be formed over getter layer 54 and may be formed from a zinc oxide. If desired, seed layer 50 may be the same material as underlying seed layer 50, although this is not required. Seed layer 50 may be a doped zinc oxide layer, such as Al doped ZnOx, or may be any other desired layer. In some examples, seed layer 50 may be a crystalline layer. However, any desired material may be used to form seed layer 50.

Barrier layer 48 may be formed on seed layer 50. If desired, barrier layer 48 may be the same material as underlying barrier layer 48, but this is not required. Like underlying barrier layer 48, barrier layer 48 on seed layer 50 may be an amorphous layer and may be dense to protect the underlying layers that have already been deposited, and the overlying layers while they are deposited. Barrier layer 48 may have an index of refraction between 1.2 and 1.7, between 1.2 and 1.5, between 1.5 and 1.7, between 1.7 and 2.1 (@ 550 nm), or any other desired value.

In some examples, barrier layer 48 may be a zinc oxide. For example, ZnSnOx may be used to form barrier layer 48. Alternatively, barrier layer 48 may include TiO₂, bismuth, or any other desired material.

Another seed layer 50 may be formed on barrier layer 48 and may be formed from a zinc oxide. If desired, seed layer 50 may be the same material as underlying seed layer 50, although this is not required. Seed layer 50 may be a doped zinc oxide layer, such as AlZnOx, or may be any other desired layer. In some examples, seed layer 50 may be a crystalline layer. However, any desired material may be used to form seed layer 50. In general, seed layer 50 may be formed from a material that facilitates the deposition of overlying infrared reflective layer 52.

Infrared reflective layer 52 may be formed on seed layer 50. If desired, infrared reflective layer 52 may be the same material as underlying infrared reflective layer 52, although this is not required. Infrared reflective layer 52 may be silver, or may be another desired infrared reflective material. In some examples, infrared reflective layer 52 may be a polycrystalline silver layer. Infrared reflective layer 52 may have any desired thickness, such as less than 30 nm, more than 10 nm, between 15-30 nm, or any other desired thickness. In one illustrative embodiment, infrared reflective layer 52 may have a thickness equal to the grain size of the polycrystalline silver forming infrared reflective layer 52. In other words, infrared reflective layer 52 may be a polycrystalline silver layer that is one grain thick.

If desired, infrared reflective layer 52 may be patterned. For example, material within infrared reflective layer 52, such as silver, may interfere with the transmission of waves, such as radio waves. If it is desirable to have radio waves pass through window 16 (e.g., if system 10 is a vehicle, a building, or an electronic device), infrared reflective layer 52 may be pattered to have openings. As a result, waves, such as radio waves, may pass through the openings unimpeded, while the remaining portions of infrared reflective layer 52 block infrared light from passing through window 16. In some examples, each infrared reflective layer 52 may have matching patterns to allow waves to pass through overlapping openings unimpeded.

This stack of layers may be repeated any desired number of times to ensure sufficient infrared reflectivity. For example, an infrared reflection coating may include at least three infrared reflective layers, at least four infrared reflective layers, or any other desired number of infrared reflective layers.

Protective layer 56 may be formed on the top of the infrared reflection coating stack. Protective layer 56 may be formed from any desired material, such as a polymer material, a dielectric material, or an oxide material. In some examples, protective layer 56 may include an ZrSiOx, AlSiOx, or SiO2 layer.

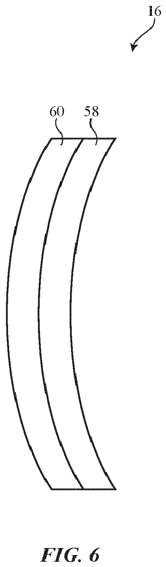

An infrared reflection coating, such as infrared reflection coating 24, may be formed on any desired window, such as window 16. In some examples, an infrared reflection coating may be formed on a curved window. An example of this arrangement is shown in FIG. 6.

As shown in FIG. 6, window 16 may include curved layer 58. Curved layer 58 may be an inner or outer window layer, such as layer 20 or layer 22 of FIG. 2. Curved layer 58 may be formed from glass, ceramic, sapphire, or any other desired material. Curved layer 58 may be formed from a single-layer glass structure and/or multi-layer glass structures. Curved layer 58 may be strengthened (e.g., by annealing, tempering, and/or chemical strengthening), if desired. In general, curved layer 58 may be a single-layer glass structure (e.g., a single layer of tempered glass) or a laminated glass layer. In embodiments in which curved layer 58 is a laminated glass layer, curved layer 58 may include multiple layers of glass that are laminated together using one or more polymer layers. The polymer layers may be a layer of polyvinyl butyral or other suitable polymer for attaching the glass layers.

Although the side view of window 16 only shows curved layer 58 curved in one direction, this is merely illustrative. If desired, curved layer 58 may be curved in two different directions or three different directions. In other words, curved layer 58 may exhibit compound curvature, if desired.

Infrared reflection coating 60 may be formed on curved layer 58. Infrared reflection coating 60 may have the same composition as infrared reflection coating 24 of FIG. 3 and/or the illustrative infrared reflection coating stack up of FIG. 5. Regardless of the composition of infrared reflection coating 60, infrared reflection coating 60 may have a curvature that matches the curvature of curved layer 58. In this way, an infrared reflection coating may be formed on a curved window.

In accordance with an embodiment, a window configured to separate an interior region from an exterior region is provided that includes a window layer, an infrared reflective layer overlapping the window layer, a getter layer on the infrared reflective layer, a barrier layer on the getter layer and a seed layer on the barrier layer.

In accordance with another embodiment, the window layer is a glass layer, the infrared reflective layer includes silver, the getter layer includes amorphous silicon rich silicon nitride, and the seed layer includes doped zinc oxide, the window further includes an additional barrier layer interposed between the glass layer and the infrared reflective layer, an additional seed layer interposed between the additional barrier layer and the infrared reflective layer, an additional infrared reflective layer on the seed layer and a protective layer that overlaps the additional infrared reflective layer.

In accordance with another embodiment, the getter layer has a thickness of 1-2 nm and the getter layer includes metal nanoparticles in the amorphous silicon rich silicon nitride.

In accordance with another embodiment, the metal nanoparticles include silver nanoparticles.

In accordance with another embodiment, the silver in the infrared reflective layer is polycrystalline silver with a grain size of 15-30 nm and the doped zinc oxide is doped with aluminum.

In accordance with another embodiment, the infrared reflective layer has a thickness that is equal to the grain size of the polycrystalline silver.

In accordance with another embodiment, the barrier layer and the additional barrier layer are ZnSnOx layers.

In accordance with another embodiment, the infrared reflective layer includes silver and the getter layer includes an amorphous material.

In accordance with another embodiment, the amorphous material is selected from the group of materials consisting of: amorphous silicon, amorphous silicon rich silicon nitride, and amorphous germanium.

In accordance with another embodiment, the infrared reflective layer includes silver and the getter layer includes ink.

In accordance with another embodiment, the infrared reflective layer includes silver and the getter layer includes metal nanoparticles in a dielectric layer.

In accordance with another embodiment, the metal nanoparticles include silver nanoparticles.

In accordance with another embodiment, the window is a curved glass layer with a first curvature and the infrared reflective layer has a second curvature that matches the first curvature.

In accordance with another embodiment, the window includes a hybrid coating layer interposed between the window layer and the infrared reflective layer.

In accordance with an embodiment, a window is provided that includes a glass layer, a first resonator on the glass layer, a second resonator that overlaps the first resonator and a getter layer interposed between the first and second resonators.

In accordance with another embodiment, the getter layer includes an amorphous material and the first resonator and second resonator each includes two half mirrors separated by a dielectric layer.

In accordance with another embodiment, the two half mirrors in the first and second resonators each includes a silver layer.

In accordance with another embodiment, the getter layer has a thickness of 1-2 nm and the amorphous material is selected from the group consisting of: amorphous silicon rich silicon nitride, amorphous silicon, and amorphous germanium.

In accordance with another embodiment, the getter layer includes metal nanoparticles in a dielectric layer.

In accordance with another embodiment, the getter layer includes an ink layer.

In accordance with an embodiment, a window is provided that includes a glass layer, a first barrier layer on the glass layer, the first barrier layer includes a zinc oxide, a first seed layer on the first barrier layer, the first seed layer includes a doped zinc oxide, a first silver layer on the first seed layer, a getter layer on the first silver layer, the getter layer includes an amorphous material, a second seed layer on the getter layer, the second seed layer includes the doped zinc oxide, a second barrier layer on the second seed layer, the second barrier layer includes the zinc oxide, a third seed layer on the second barrier layer, the third seed layer includes the doped zinc oxide and a second silver layer on the third seed layer.

The foregoing is merely illustrative and various modifications can be made to the described embodiments. The foregoing embodiments may be implemented individually or in any combination.

Exemplary devices are set out in the following items.
1. A window configured to separate an interior region from an exterior region, comprising:
   a window layer;
   an infrared reflective layer overlapping the window layer;
   a getter layer on the infrared reflective layer;
   a barrier layer on the getter layer; and
   a seed layer on the barrier layer.
2. The window defined in item 1, wherein the window layer is a glass layer, the infrared reflective layer comprises silver, the getter layer comprises amorphous silicon rich silicon nitride, and the seed layer comprises doped zinc oxide, the window further comprising:
   an additional barrier layer interposed between the glass layer and the infrared reflective layer;
   an additional seed layer interposed between the additional barrier layer and the infrared reflective layer;
   an additional infrared reflective layer on the seed layer; and
   a protective layer that overlaps the additional infrared reflective layer.
3. The window defined in item 2, wherein the getter layer has a thickness of 1-2 nm and wherein the getter layer comprises metal nanoparticles in the amorphous silicon rich silicon nitride.
4. The window defined in item 3, wherein the metal nanoparticles comprise silver nanoparticles.
5. The window defined in item 2, wherein the silver in the infrared reflective layer is polycrystalline silver with a grain size of 15-30 nm and wherein the doped zinc oxide is doped with aluminum.
6. The window defined in item 5, wherein the infrared reflective layer has a thickness that is equal to the grain size of the polycrystalline silver.
7. The window defined in item 6, wherein the barrier layer and the additional barrier layer are ZnSnOx layers.
8. The window defined in item 1, wherein the infrared reflective layer comprises silver and wherein the getter layer comprises an amorphous material.
9. The window defined in item 8, wherein the amorphous material is selected from the group of materials consisting of: amorphous silicon, amorphous silicon rich silicon nitride, and amorphous germanium.
10. The window defined in item 1, wherein the infrared reflective layer comprises silver and wherein the getter layer comprises ink.
11. The window defined in item 1, wherein the infrared reflective layer comprises silver and wherein the getter layer comprises metal nanoparticles in a dielectric layer.
12. The window defined in item 11, wherein the metal nanoparticles comprise silver nanoparticles.
13. The window defined in item 1, wherein the window is a curved glass layer with a first curvature and wherein the infrared reflective layer has a second curvature that matches the first curvature.
14. The window defined in item 1, further comprising a hybrid coating layer interposed between the window layer and the infrared reflective layer.
15. The window defined in item 1, further comprising:
   a first resonator on the window layer; and
   a second resonator that overlaps the first resonator, wherein the getter layer is interposed between the first and second resonators.
16. A window, comprising:
   a glass layer;
   a first resonator on the glass layer;
   a second resonator that overlaps the first resonator; and
   a getter layer interposed between the first and second resonators.
17. The window defined in item 16, wherein the getter layer comprises an amorphous material and wherein the first resonator and second resonator each comprises two half mirrors separated by a dielectric layer.
18. The window defined in item 17, wherein the two half mirrors in the first and second resonators each comprises a silver layer.
19. The window defined in item 18, wherein the getter layer has a thickness of 1-2 nm and wherein the amorphous material is selected from the group consisting of: amorphous silicon rich silicon nitride, amorphous silicon, and amorphous germanium.
20. The window defined in item 16, wherein the getter layer comprises metal nanoparticles in a dielectric layer.
21. The window defined in item 16, wherein the getter layer comprises an ink layer.
22. A window, comprising:
   a glass layer;
   a first barrier layer on the glass layer, wherein the first barrier layer comprises a zinc oxide;
   a first seed layer on the first barrier layer, wherein the first seed layer comprises a doped zinc oxide;
   a first silver layer on the first seed layer;
   a getter layer on the first silver layer, wherein the getter layer comprises an amorphous material;
   a second seed layer on the getter layer, wherein the second seed layer comprises the doped zinc oxide;
   a second barrier layer on the second seed layer, wherein the second barrier layer comprises the zinc oxide;
   a third seed layer on the second barrier layer, wherein the third seed layer comprises the doped zinc oxide; and
   a second silver layer on the third seed layer.
The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A window configured to separate an interior region from an exterior region, comprising:
a window layer;
an infrared reflective layer overlapping the window layer;
a getter layer on the infrared reflective layer;
a barrier layer on the getter layer; and
a seed layer on the barrier layer.

2. The window defined in claim 1, wherein the window layer is a glass layer, the infrared reflective layer comprises silver, the getter layer comprises amorphous silicon rich silicon nitride, and the seed layer comprises doped zinc oxide, the window further comprising:
an additional barrier layer interposed between the glass layer and the infrared reflective layer;
an additional seed layer interposed between the additional barrier layer and the infrared reflective layer;
an additional infrared reflective layer on the seed layer; and
a protective layer that overlaps the additional infrared reflective layer.

3. The window defined in claim 2, wherein the getter layer has a thickness of 1-2 nm and wherein the getter layer comprises metal nanoparticles in the amorphous silicon rich silicon nitride.

4. The window defined in claim 3, wherein the metal nanoparticles comprise silver nanoparticles.

5. The window defined in claim 2, wherein the silver in the infrared reflective layer is polycrystalline silver with a grain size of 15-30 nm and wherein the doped zinc oxide is doped with aluminum.

6. The window defined in claim 5, wherein the infrared reflective layer has a thickness that is equal to the grain size of the polycrystalline silver.

7. The window defined in claim 6, wherein the barrier layer and the additional barrier layer are ZnSnOx layers.

8. The window defined in claim 1, wherein the infrared reflective layer comprises silver and wherein the getter layer comprises an amorphous material.

9. The window defined in claim 8, wherein the amorphous material is selected from the group of materials consisting of: amorphous silicon, amorphous silicon rich silicon nitride, and amorphous germanium.

10. The window defined in claim 1, wherein the infrared reflective layer comprises silver and wherein the getter layer comprises ink.

11. The window defined in claim 1, wherein the infrared reflective layer comprises silver and wherein the getter layer comprises metal nanoparticles in a dielectric layer.

12. The window defined in claim 11, wherein the metal nanoparticles comprise silver nanoparticles.

13. The window defined in claim 1, wherein the window is a curved glass layer with a first curvature and wherein the infrared reflective layer has a second curvature that matches the first curvature.

14. The window defined in claim 1, further comprising a hybrid coating layer interposed between the window layer and the infrared reflective layer.

15. The window defined in claim 1, further comprising:
a first resonator on the window layer; and
a second resonator that overlaps the first resonator, wherein the getter layer is interposed between the first and second resonators.
